(19) Europäisches Patentamt
European Patent Office
Office européen des brevets

(11) **EP 2 586 755 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(51) Int Cl.:
*C04B 35/32* *(2006.01)*      *C04B 35/40* *(2006.01)*
*C01G 49/00* *(2006.01)*      *C01G 51/00* *(2006.01)*
*H01F 1/11* *(2006.01)*       *H01F 41/02* *(2006.01)*

(21) Anmeldenummer: **13152546.1**

(22) Anmeldetag: **18.12.2008**

(54) **Hartmagnetischer La und Co dotierte hexagonale Strontiumferritwerkstoff**

Hard magnetic La and Co doped hexagonal strontiumferrit

Ferrite hexagonale magnétique de strontium dotée par Co et La

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**01.05.2013 Patentblatt 2013/18**

(62) Dokumentnummer(n) der früheren Anmeldung(en) nach Art. 76 EPÜ:
**08172099.7 / 2 199 266**

(73) Patentinhaber: **Tridelta Hartferrite GmbH**
**07629 Hermsdorf (DE)**

(72) Erfinder: **Mikenda, Kevin**
**07629 Hermsdorf (DE)**

(74) Vertreter: **Henkel, Breuer & Partner**
**Patentanwälte**
**Maximiliansplatz 21**
**80333 München (DE)**

(56) Entgegenhaltungen:
**WO-A-03/056578      JP-A- 2001 223 104**
**JP-A- 2002 353 021**

**Beschreibung**

Die Erfindung betrifft einen hartmagnetischen Werkstoff und daraus hergestellte Magnete. Insbesondere betrifft die Erfindung einen Strontiumferrit mit verbesserten magnetischen Eigenschaften.

Strontiumferrite der allgemeinen Formel $SrFe_{12}O_{19}$ werden seit langer Zeit als hartmagnetische Ferrite in großer Menge verwendet. Es ist bekannt, dass durch Zugabe verschiedener Elemente, wie etwa Kobalt und Lanthan die magnetischen Eigenschaften beeinflusst werden können. So werden zum Beispiel Kobalt für eine Erhöhung der Remanenz $B_R$ und Lanthan für eine Erhöhung der Koerzitivfeldstärke $H_{CJ}$ und der Bruchfestigkeit eingesetzt. Ein derartiger modifizierter Strontiumferrit hat die allgemeine Formel:

$$Sr_{1-x}La_xFe_{12-y}CO_yO_{19}$$

Wobei X = y = 0,01 - 1,00 bzw. X = 0,15 und y = x/1,6n bis = x/2,6n, n das eingesetzte Verhältnis $Fe_2O_3$ : SrO ist und einen Wert von 5-6 annehmen kann.

Außer der genauen Menge der jeweiligen Zusätze wird ein derartiger Ferrit stark durch das Herstellungsverfahren, insbesondere durch die Bedingungen beim Sintern, beeinflusst. So zeigt sich allgemein, dass eine Erhöhung der Sintertemperatur zu einer Erhöhung der Remanenz $B_R$ und zu einer Abnahme der Koerzitivfeldstärke $H_{CJ}$ führt. Umgekehrt wirkt sich eine niedrige Sintertemperatur positiv auf die Koerzitivfeldstärke $H_{CJ}$ aus, senkt aber die Remanenz $B_R$. Derartige modifizierte Strontiumferrite sind unter anderem aus der WO 99/34376 A1, der EP 1465214 A1, der US 20040151661 A1 oder der WO 03/056578 A1 bekannt.

JP2002353021 erwähnt einen hartmagnetischen Strontiumferritmagnet der allgemeinen Formel Sr1-xLaxFe12-yCoyO19. Das Strontiumferritpulver wird bei 1250°C kalziniert. Sinterung findet bei 1230°C statt. Die mittlere Teilchengrösse des gemahlenen Pulvers ist 1 Mikron. X und y sind in allen Fällen identisch, und können 0,2 oder 0,15 oder 0,1 sein. Der Wert von Br ist höher als 5100. Auch zeigt die EP 0964411 A1 einen modifizierten Strontiumferrit der obengenannten Form, bei dem x = y = 0,15 erfüllt ist. Dieser Strontiumferrit hat eine hohe Koerzitivfeldstärke $H_{CJ}$ von 4500 Oe. Es sind keine Angaben über die Remanenz $B_R$ gezeigt. Aus dieser Druckschrift ist ersichtlich, dass kleine Änderungen in den Anteilen des Kobalts, des Lanthans oder des Sauerstoffs zu beachtlichen Änderungen der magnetischen Eigenschaften führen. Auch lassen sich die magnetischen Eigenschaften dadurch beeinflussen, ob Lanthan und Cobalt dem Strontiumferrit vor dem Kalzinieren oder nach dem Kalzinieren zugegeben werden.

Aus der WO 98/03864 ist darüber hinaus ein derartiger modifizierter Strontiumferrit bekannt, wobei umfangreiche Untersuchungen zeigen, dass der Zusammenhang zwischen der Konzentration an Kobalt und Lanthan und den magnetischen Eigenschaften sehr komplex ist. Nach dieser Veröffentlichung ist ein modifizierter Strontiumferrit bevorzugt, bei dem der Anteil für Kobalt und Lanthan bei x = y = 0,3 liegt.

Aufgabe der Erfindung ist es daher, einen modifizierten Strontiumferrit bereitzustellen, der verbesserte magnetische Eigenschaften hat, insbesondere der eine hohe Remanenz $B_R$ und gleichzeitig eine hohe Koerzitivfeldstärke $H_{CJ}$ zeigt, und bei dem die Rechteckigkeit der Entmagnetisierungskurve (squareness), ausgedrückt durch $H_K/H_{CJ}$, hoch ist. $H_K$ ist die Feldstärke, bei der die Remanenz irreversibel um 5% verkleinert wird.

Erfindungsgemäß wird ein derartiger modifizierter Strontiumferrit durch die Merkmale der Anspruchs 1 bestimmt. Die abhängigen Ansprüche betreffen weitere vorteilhafte Aspekte der Erfindung.

Im Folgenden werden Ausführungsformen der Erfindung anhand der beiliegenden Figuren detaillierter beschrieben. In den Figuren zeigen:

Figur 1 ein Ablaufdiagramm des Herstellungsverfahrens für den modifizierten Strontiumferrit der Erfindung;

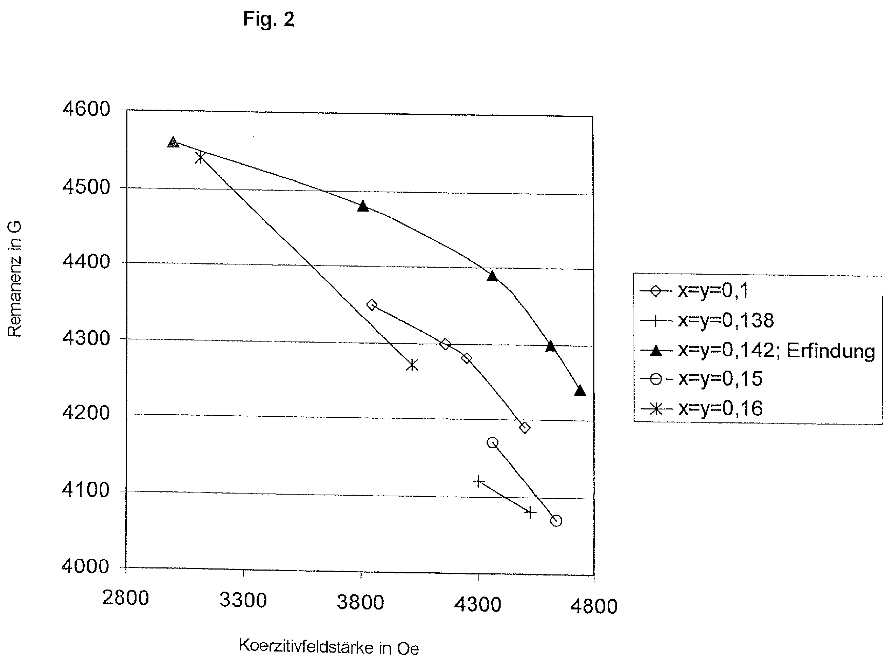

Figur 2 ein Diagramm zur Verdeutlichung der vorteilhaften magnetischen Eigenschaften des erfindungsgemäß modifizierten Strontiumferrits.

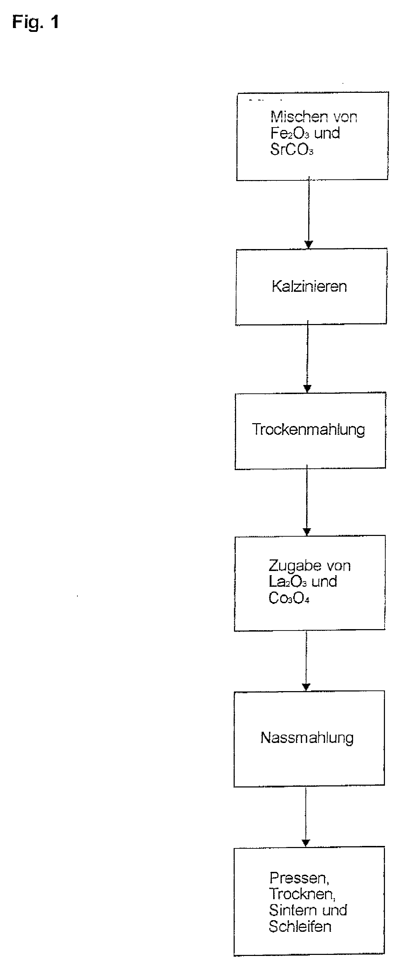

Wie es in Figur 1 gezeigt ist, wird der erfindungsgemäße modifizierte Strontiumferrit wie folgt hergestellt. In einem ersten Schritt wird ein Eisenoxyd mit einem Strontiumoxyd oder Strontiumcarbonat gemischt. Das so hergestellte Gemisch wird in einem zweiten Schritt bei einer Temperatur von 1300°C, +/- 20°C kalziniert.

In einem dritten Schritt wird das kalzinierte Material trocken zerkleinert auf mittlere Teilchengrößen von 10 - 30 $\mu$m. Diesem Ferritpulver werden als Additive Lanthanoxid ($La_2O_3$) und Kobaltoxid ($Co_3O_4$) zugegeben.

Als nächster Schritt erfolgt eine Nassmahlung auf Teilchengrößen von 0,7 - 1,0 $\mu$m.

Diese Suspension wird im Magnetfeld gepresst, getrocknet und anschließend gesintert bei Temperaturen zwischen 1220 °C und 1250 °C, vorzugsweise zwischen 1225 °C und 1245 °C. Der infolge des Nassmahlens erhaltenen Suspension wird als Additive Lanthanoxyd ($La_2O_3$) und Kobaltoxyd ($Co_3O_4$) zugegeben.

In einem Magnetfeld wird dann der Rohling getrocknet, gepresst, und anschließend bei Temperaturen zwischen 1220°C und 1250°C, vorzugsweise zwischen 1225°C und 1245°C gesintert.

### Erstes Beispiel

Mit dem oben beschriebenen Verfahren wurde ein erstes erfindungsgemäßes Beispiel hergestellt. Hierzu wurde dem bereits kalzinierten und vorzerkleinerten Strontiumferrit bei der Nassmahlung Lanthanoxid und Kobaltoxid in einem vorgegebenen Mengenverhältnis beigegeben. Anschließend wurde die Suspension in einem Magnetfeld von 3.000 Oe gepresst, dann getrocknet und bei 1225 °C gesintert. Das fertige Produkt hatte dann eine Zusammensetzung der Formel $Sr_{1-x}La_xFe_{12-y}Co_yO_{19}$, wobei x = y = 0,142 war.

Anschließend wurden die magnetischen Hauptkennwerte, nämlich die Remanenz $B_R$ und die Polarisationskoerzitivfeldstärke $H_{CJ}$ bei 23 °C gemessen. Die Messung erfolgte gemäß der Vorschrift DIN EN 60404 - 5.

Hierbei ergaben sich Werte für die Remanenz $B_R$ von 4240 G, für das Koerzitivfeld $H_{CJ}$ von 4738 Oe, und für das Verhältnis von $H_K$ zu $H_{CJ}$ von 88%.

### Zweites Beispiel

Das zweite Beispiel wurde identisch zu dem ersten Beispiel hergestellt, mit dem einzigen Unterschied, dass die Sintertemperatur nicht bei 1225°C, sondern bei 1230°C lag.

Der Wert für die Remanenz $B_R$ lag bei 4300 G, der Wert für die Koerzitivfeldstärke $H_{CJ}$ bei 4612 Oe, und das Verhältnis von $H_K$ zu $H_{CJ}$ lag bei 90%.

### Drittes Beispiel

Wiederum wurde identisch zu dem ersten und zweiten Beispiel ein modifizierter Strontiumferrit der gleichen Zusammensetzung vorbereitet. Die Sintertemperatur lag hierbei bei 1235°C. Der Wert der Remanenz $B_R$ stellte sich auf 4390 G ein. Der Wert für das Koerzitivfeld $H_{CJ}$ lag bei 4361 Oe. Das Verhältnis von $H_K$ zu $H_{CJ}$ lag bei 91%.

### Viertes Beispiel

In einem vierten Beispiel wurde nun eine Sintertemperatur von 1240°C auf einen identischen modifizierten Strontiumferrit angewendet. Der Wert der Remanenz $B_R$ stiegt auf 4480 G, während die Koerzitivfeldstärke $H_{CJ}$ auf 3808 Oe absank. Das Verhältnis von $H_K$ zu $H_{CJ}$ lag weiterhin bei 91%.

### Fünftes Beispiel

In einem fünften Beispiel wurde nun eine Sintertemperatur von 1245°C gewählt. Ein modifizierter Strontiumferrit der gleichen Zusammensetzung wie in den ersten vier Beispielen wurde hierzu verwendet. Der Wert der Remanenz $B_R$ lag bei 4560 G. Der Wert für die Koerzitivfeldstärke $H_{CJ}$ sank auf 3003 Oe. Das Verhältnis von $H_K$ zu $H_{CJ}$ betrug 92%.

Alle diese erfindungsgemäßen modifizierten Strontiumferrite zeigen eine ausgezeichnete squareness durch hohe Werte von $H_K$ zu $H_{CJ}$ bei gleichzeitig sehr hohen Werten für sowohl die Remanenz als auch für die Koerzitivfeldstärke $H_{CJ}$. Die so hergestellten Hartferrit-Magnete haben wesentlich bessere magnetische Eigenschaften als die konventionellen Strontiumferrit-Magnete.

### Erstes Vergleichsbeispiel

Zum Vergleich wurde nun ein modifizierter Strontiumferrit der Formel $Sr_{1-x}La_xFe_{12-y}Co_yO_{19}$ hergestellt, wobei x = y = 0,15 eingestellt wurde. Dieser modifizierte Strontiumferrit wurde ansonsten in der gleichen Art und Weise hergestellt, wie die erfindungsgemäßen Strontiumferrite, insbesondere wie der erfindungsgemäße Strontiumferrit des zweiten Beispiels. Die Sintertemperatur lag auch hier bei 1230°C.

Es stellte sich eine Remanenz $B_R$ von 4070 G ein. Die Koerzitivfeldstärke $H_{CJ}$ lag bei 4637 Oe. Das Verhältnis zwischen von $H_K$ zu $H_{CJ}$ sank auf 73%.

### Zweites Vergleichsbeispiel

Mit der gleichen Zusammensetzung des ersten Vergleichsbeispiels wurde wiederum ein modifizierter Strontiumferrit hergestellt, wobei die Sintertemperatur bei 1235°C lag. Der Wert der Remanenz $B_R$ stellte sich bei 4170 G ein. Der Wert für die Koerzitivfeldstärke $H_{CJ}$ betrug 4361 Oe. Das Verhältnis von $H_K$ zu $H_{CJ}$ lag bei 85%.

Erkennbar sind die Werte für die Remanenz bei dem ersten und zweiten Vergleichsbeispiel deutlich niedriger als bei den erfindungsgemäßen modifizierten Strontiumferriten. Auch ist das Verhältnis von $H_K$ zu $H_{CJ}$ deutlich schlechter.

Drittes Vergleichsbeispiel

Wiederum wurde ein modifizierter Strontiumferrit nach dem gleichen Verfahren hergestellt, wie bei den erfindungsgemäßen Beispielen. Allerdings wurde hier vorgegeben, dass x = y = 0,1 gilt.

Bei einer Sintertemperatur von 1230°C bei diesem Vergleichsbeispiel stellten sich Werte für die Remanenz $B_R$ von 4190 G, und für die Koerzitivfeldstärke $H_{CJ}$ von 4499 Oe ein. Der Wert des Verhältnisses von $H_K$ zu $H_{CJ}$ lag bei 88%.

Erkennbar ist bei diesem Vergleichsbeispiel sowohl die Remanenz $B_R$ als auch die Koerzitivfeldstärke $H_{CJ}$ niedriger als bei dem erfindungsgemäßen Beispiel bei der gleichen Sintertemperatur.

Viertes Vergleichsbeispiel

Mit der gleichen Zusammensetzung wie beim dritten Vergleichsbeispiel wurde wiederum ein modifizierter Strontiumferrit hergestellt. Die Sintertemperatur wurde auf 1240°C eingestellt. Der Wert der Remanenz $B_R$ betrug 4300 G, und für die Koerzitivfeldstärke $H_{CJ}$ ergaben sich 4159 Oe. Das Verhältnis von $H_K$ zu $H_{CJ}$ lag bei 90%.

Obwohl bei diesem Vergleichsbeispiel ein sehr guter Wert für die Koerzitivfeldstärke $H_{CJ}$ erreicht wurde, lag die Remanenz $B_R$ doch deutlich unter dem Wert des entsprechenden erfindungsgemäßen Beispiels.

Fünftes Vergleichsbeispiel

Bei der gleichen Zusammensetzung wie bei dem dritten und vierten Vergleichsbeispiel wurde ein weiterer modifizierter Strontiumferrit hergestellt, und bei einer Temperatur von 1245°C gesintert. Der Wert der Remanenz $B_R$ stellte sich mit 4350 G ein. Der Wert der Koerzitivfeldstärke $H_{CJ}$ betrug 3845, und das Verhältnis von $H_K$ zu $H_{CJ}$ lag weiterhin bei 90%.

Der Vergleich des dritten bis fünften Vergleichsbeispiels mit den erfindungsgemäßen Ausführungsformen zeigt, dass erfindungsgemäß jeweils deutlich bessere Wertepaare für die Remanenz und die Koerzitivfeldstärke bei vergleichbar gutem Verhältnis von $H_K$ zu $H_{CJ}$ erreicht werden.

Sechstes Vergleichsbeispiel

Bei dem sechsten Vergleichsbeispiel wurde ein modifizierter Strontiumferrit der Formel $Sr_{1-x}La_xFe_{12-y}CoyO_{19}$ hergestellt, wobei x = y = 0,16 gewählt wurde.

Der so hergestellte Strontiumferrit wurde mit einer Temperatur von 1245°C gesintert. Die Remanenz $B_R$ stellte sich auf einen Wert von $B_R$ = 4540 G ein. Die Koerzitivfeldstärke $H_{CJ}$ betrug 3116 Oe. Das Verhältnis von $H_K$ zu $H_{CJ}$ lag bei 94%.

Der so hergestellte modifizierte Strontiumferrit hat gute Werte für Remanenz und squareness, der Wert für die Koerzitivfeldstärke ist aber sehr viel kleiner als bei dem erfindungsgemäßen Beispiel.

Siebtes Vergleichsbeispiel

Mit der gleichen Zusammensetzung wie beim sechsten Vergleichsbeispiel wurde wiederum ein modifizierter Strontiumferrit hergestellt, und mit 1235°C gesintert. Hierbei stellte sich die Remanenz auf einen Wert $B_R$ = 4270 G ein. Der Wert für $H_{CJ}$ betrug 4021 Oe. Das Verhältnis von $H_K$ zu $H_{CJ}$ lag bei 90%.

Es zeigt sich, dass bei dieser Zusammensetzung des Strontiumferrits gemäß Vegleichsbeispiel 6 und 7 die Abhängigkeit der magnetischen Eigenschaften von der Sintertemperatur sehr ausgeprägt ist. Dies führt dazu, dass schon bei kleineren Schwankungen der Sintertemperatur die vorteilhaften Eigenschaften nicht mehr gewährleistet werden können.

Achtes Vergleichsbeispiel

Es wurde wiederum ein modifizierter Strontiumferrit der Formel $Sr_{1-x}La_xFe_{12-y}Co_yO_{19}$ hergestellt. Der Wert für x = y wurde auf 0,138 eingestellt. Bei einer Sintertemperatur von 1230°C ergab sich ein Wert für die Remanenz $B_R$ von 4080 G. Der Wert für $H_{CJ}$ lag bei 4524 Oe. Das Verhältnis von $H_K$ zu $H_{CJ}$ lag bei 74%.

Neuntes Vergleichsbeispiel

Mit der gleichen Zusammensetzung wie bei dem achten Vegleichsbeispiel, aber bei einer Sintertemperatur von 1235°C wurde ein neuntes Vergleichsbeispiel vermessen. Hier lag der Wert der Remanenz $B_R$ bei 4120 G, während die Koerzitivfeldstärke $H_{CJ}$ bei 4298 Oe lag. Das Verhältnis zwischen Remanenz $B_R$ und Sättigungsmagnetisierung $B_S$

war gleich 83%.

Obwohl die Zusammensetzung des modifizierten Strontiumferrits des achten und neunten Vergleichsbeispiels relativ nah bei den erfindungsgemäßen Ausführungsformen liegt, sind die Werte für die Remanenz $B_R$, die Koerzitivfeldstärke $H_{CJ}$ und auch für das Verhältnis von $H_K$ zu $H_{CJ}$ bei gleichen Sintertemperaturen deutlich schlechter als bei der Erfindung. Überraschenderweise sind diese Werte auch deutlich schlechter als bei den dritten bis fünften Vergleichsbeispielen. Hieran zeigt sich, dass bereits kleine Änderungen der Zusammensetzung beachtliche Auswirkungen auf die magnetischen Eigenschaften haben können.

Bei den erfindungsgemäßen ersten bis fünften Beispielen zeigt sich über den gesamten Bereich der Sintertemperatur von 1225°C bis 1245°C, dass ein modifizierter Strontiumferrit mit hervorragenden Eigenschaften erhalten werden kann. Sowohl hinsichtlich der Remanenz $B_R$, als auch der der Koerzitivfeldstärke $H_{CJ}$ wie auch des Verhältnisses Remanenz $B_R$ und Sättigungsmagnetisierung $B_S$ sind die erfindungsgemäß hergestellten Strontiumferrite ausgezeichnet und denen der Vergleichsbeispiele überlegen.

Insgesamt zeigt sich, dass es mit dem erfindungsgemäßen modifizierten Strontiumferrit möglich ist, bei einem Verhältnis von $H_K$ zu $H_{CJ}$ von 88% oder mehr ein Wertepaar für die Koerzitivfeldstärke $H_{CJ}$ und die Remanenz $B_R$ zu erreichen, dass der folgenden Gleichung genügt:

$$B_R \, G^{-1} + 0{,}1844 * Oe^{-1} * H_{CJ} \geq 5100 \; .$$

Zur Übersicht zeigt Tabelle 1 die Zusammensetzung und die magnetischen Kennwerte der erfindungsgemäßen Ausführungsformen und der Vergleichsbeispiele.

Tabelle 1

|  | x=Y= | $B_R$ in G | $H_{CJ}$ in Oe | Sinter-temperatur | $H_K/H_{CJ} * 100$ | $B_R \, G^{-1} + 0{,}1844 * Oe^{-1} * H_{CJ}$ |
|---|---|---|---|---|---|---|
| **E1** | **0,142** | **4240** | **4738** | **1225** | **88** | **5113** |
| **E2** | **0,142** | **4300** | **4612** | **1230** | **90** | **5150** |
| **E3** | **0,142** | **4390** | **4361** | **1235** | **91** | **5194** |
| **E4** | **0,142** | **4480** | **3808** | **1240** | **91** | **5182** |
| **E5** | **0,142** | **4560** | **3003** | **1245** | **92** | **5113** |
| V1 | 0,150 | 4070 | 4637 | 1230 | 73 | 4925 |
| V2 | 0,150 | 4170 | 4361 | 1235 | 85 | 4974 |
| V3 | 0,100 | 4190 | 4499 | 1230 | 88 | 5019 |
| V4 | 0,100 | 4300 | 4159 | 1240 | 90 | 5066 |
| V5 | 0,100 | 4350 | 3845 | 1245 | 90 | 5059 |
| V6 | 0,160 | 4540 | 3116 | 1245 | 94 | 5059 |
| V7 | 0,160 | 4270 | 4021 | 1235 | 90 | 5011 |
| V8 | 0,138 | 4080 | 4524 | 1230 | 74 | 4914 |
| V9 | 0,138 | 4120 | 4298 | 1235 | 83 | 4912 |

**Patentansprüche**

1. Modifizierter Strontiumferrit der allgemeinen Formel $Sr_{1-x}La_xFe_{12-y}Co_yO_{19}$, **dadurch gekennzeichnet, dass**

$$0{,}14 \leq x \leq 0{,}145;$$

$$0{,}14 \leq y \leq 0{,}145;$$

wobei

$$B_R \geq (5100 - 0{,}1844 * Oe^{-1} * H_{CJ}) \; G;$$

wobei $B_R$ die Remanenzmagnetisierung in G ist, wobei $H_{CJ}$ die Koerzitivfeldstärke in Oe ist.

2. Modifizierter Strontiumferrit nach Anspruch 1, **dadurch gekennzeichnet, dass** x = y = 0,142 erfüllt ist.

3. Modifizierter Strontiumferrit nach einem der Ansprüche 1 bis 3, **dadurch gekennzeichnet, dass** das Verhältnis von $H_K$ zu $H_{CJ}$ > 88%, vorzugsweise >90% ist.

4. Modifizierter Strontiumferrit nach einem der vorhergehenden Ansprüche, **dadurch gekennzeichnet, dass** bei der Herstellung ein Sintervorgang bei einer Temperatur zwischen 1225°C und 1.245 °C, ausgeführt wurde.

5. Modifizierter Strontiumferrit nach einem der vorhergehenden Ansprüche, **dadurch gekennzeichnet, dass** Lanthanoxyd ($La_2O_3$) und Kobaltoxyd ($Co_3O_4$) nach dem Kalzinierungsschritt hinzugefügt werden.

6. Hartmagnetischer Gegenstand, **dadurch gekennzeichnet, dass** er aus einem modifizierten Strontiumferrit nach einem der Ansprüche 1 bis 5 hergestellt wurde.

7. Verfahren zur Herstellung eines modifizierten Strontium ferrits nach einem der Ansprüche 1 bis 5, **gekennzeichnet durch** die Schritte:

Vorlegen einer Mischung aus Eisenoxyd und Strontiumcarbonat;
Kalzinieren der Mischung bei einer Temperatur von 1300°C +/- 20°C;
Trockenes Vorzerkleinern des kalzinierten Strontiumferrits;
Beimischen von Lanthanoxid und Kobaltoxid in einer vorgegebenen Menge;
Nassmahlen des kalzinierten Strontiumferrits mit den Additiven Lanthanoxid und Kobaltoxid bis zu einer Teilchengröße im Bereich 0,7 - 1,0 $\mu$m;
Pressen im Magnetfeld, Trocknen und Sintern des so gewonnenen Rohlings bei einer Temperatur im Bereich zwischen 1220°C und 1250°C, vorzugsweise zwischen 1225°C, und 1245°C;
**dadurch** gekennzeichnet, dass
Lanthanoxyd und Kobaltoxyd in einer solchen Menge hinzugegeben werden, dass bei dem fertigen gesinterten modifizierten Strontiumferrit sich eine Zusammensetzung gemäß folgender Formel ergibt: $Sr_{1-x}La_xFe_{12-y}Co_yO_{19}$;
wobei $0,14 \leq x \leq 0,145$; und

$$0,14 \leq y \leq 0,145.$$

**Claims**

1. Modified strontium ferrite of the general formula $Sr_{1-x}La_xFe_{12-y}Co_yO_{19}$, **characterised in that**

$$0.14 \leq x \leq 0.145;$$

$$0.14 \leq y \leq 0.145;$$

where

$$B_R \geq (5100 - 0.1844 * Oe^{-1} * H_{CJ})\ G;$$

where $B_R$ is the remanent magnetisation in G, $H_{CJ}$ being the coercivity in Oe.

2. Modified strontium ferrite according to claim 1, **characterised in that** x = y = 0.142 is satisfied.

3. Modified strontium ferrite according to any of claims 1 to 3, **characterised in that** the proportion of $H_K$ to $H_{CJ}$ is > 88 %, preferably > 90 %.

4. Modified strontium ferrite according to any of the preceding claims, **characterised in that**, during preparation, a sintering process is carried out at a temperature of between 1225 °C and 1245 °C.

5. Modified strontium ferrite according to any of the preceding claims, **characterised in that** lanthanum oxide ($La_2O_3$) and cobalt oxide ($Co_3O_4$) are added following the calcination step.

6. Magnetically hard object, **characterised in that** it is produced from a modified strontium ferrite according to any of claims 1 to 5.

7. Method for preparing a modified strontium ferrite according to any of claims 1 to 5, **characterised by** the steps of:

   providing a mixture of iron oxide and strontium carbonate;
   calcining the mixture at a temperature of 1300 °C +/- 20 °C;
   dry pre-crushing the calcined strontium ferrite;
   admixing lanthanum oxide and cobalt oxide in a predetermined amount;
   wet-grinding the calcined strontium ferrite together with the additives lanthanum oxide and cobalt oxide to a particle size in the range of from 0.7 - 1.0 $\mu$m;
   magnetic field pressing, drying and sintering the blank thus obtained at a temperature in the range of between 1200 °C and 1250 °C, preferably between 1225 °C and 1245 °C;
   **characterised in that**
   lanthanum oxide and cobalt oxide are added in an amount such that the finished sintered modified strontium ferrite has a composition according to the following formula: $Sr_{1-x}La_xFe_{12-y}Co_yO_{19}$;
   where $0.14 \leq x \leq 0.145$; and

$$0.14 \leq y \leq 0.145.$$

**Revendications**

1. Ferrite modifiée de strontium de formule générale : $Sr_{1-x}La_xFe_{12-y}Co_yO_{19}$, **caractérisée en ce que**

$$0,14 \leq x \leq 0,145 ;$$

$$0,14 \leq y \leq 0,145 ;$$

où

$$B_R \geq (5100 - 0,1844 * Oe^{-1} * H_{CJ}) \text{ G ;}$$

où $B_R$ est la rémanence magnétique en G et où $H_{CJ}$ est le champ coercitif en Oe.

2. Ferrite modifiée de strontium selon la revendication 1, **caractérisée en ce que** la condition x = y = 0,142 est remplie.

3. Ferrite modifiée de strontium selon l'une des revendications 1 à 3, **caractérisée en ce que** le rapport de $H_K$ à $H_{CJ}$ est > 88 %, de préférence > 90 %.

4. Ferrite modifiée de strontium selon l'une des revendications précédentes, **caractérisée en ce que**, lors de la fabrication, une opération de frittage est réalisée à une température comprise entre 1225 °C et 1245 °C.

5. Ferrite modifiée de strontium selon l'une des revendications précédentes, **caractérisée en ce que** de l'oxyde de

lanthane ($La_2O_3$) et de l'oxyde de cobalt ($Co_3O_4$) sont ajoutés après l'étape de calcination.

6. Objet magnétique dur, **caractérisé en ce qu'**il a été fabriqué à partir d'une ferrite modifiée de strontium selon l'une des revendications 1 à 5.

7. Procédé de fabrication d'une ferrite modifiée de strontium selon l'une des revendications 1 à 5, **caractérisé par** les étapes suivantes :

    fournir un mélange d'oxyde de fer et de carbonate de strontium ;
    calcination du mélange à une température de 1300 °C, +/- 20 °C ;
    concassage préalable à sec de la ferrite de strontium calcinée ;
    mélange de l'oxyde de lanthane et de l'oxyde de cobalt dans une quantité prédéterminée ;
    broyage par voie humide de la ferrite de strontium calcinée avec les additifs oxyde de lanthane et oxyde de cobalt jusqu'à une granulométrie dans une plage de 0,7 à 1,0 $\mu$m ;
    pressage dans le champ magnétique, séchage et frittage de l'ébauche ainsi obtenue à une température dans une plage comprise entre 1220 °C et 1250 °C, de préférence comprise entre 1225 °C et 1245 °C ;
    **caractérisé en ce que**
    l'oxyde de lanthane et l'oxyde de cobalt sont ajoutés dans une quantité telle qu'il en résulte une composition selon la formule suivante pour la ferrite modifiée de strontium, frittée finale :

$$Sr_{1-x}La_xFe_{12-y}Co_yO_{19} \; ;$$

où $0,14 \leq x \leq 0,145$ ; et

$$0,14 \leq y \leq 0,145.$$

**Fig. 1**

```
┌─────────────────┐
│  Mischen von    │
│  Fe₂O₃ und      │
│  SrCO₃          │
└─────────────────┘
         │
         ▼
┌─────────────────┐
│  Kalzinieren    │
└─────────────────┘
         │
         ▼
┌─────────────────┐
│  Trockenmahlung │
└─────────────────┘
         │
         ▼
┌─────────────────┐
│  Zugabe von     │
│  La₂O₃ und      │
│  Co₃O₄          │
└─────────────────┘
         │
         ▼
┌─────────────────┐
│  Nassmahlung    │
└─────────────────┘
         │
         ▼
┌─────────────────┐
│  Pressen,       │
│  Trocknen,      │
│  Sintern und    │
│  Schleifen      │
└─────────────────┘
```

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9934376 A1
- EP 1465214 A1
- US 20040151661 A1
- WO 03056578 A1
- JP 2002353021 B
- EP 0964411 A1
- WO 9803864 A